# FASCICULE DE BREVET EUROPEEN

(11) **EP 3 972 344 B1**
(45) Date de publication et mention de la délivrance du brevet: **14.08.2024**
(21) Numéro de dépôt: 21197709.5
(22) Date de dépôt: 20.09.2021
(51) Int. Cl.: H04W 36/24, H04W 36/16

(54) **PROCEDE DE BASCULEMENT D'UNE STATION MOBILE ENTRE DEUX POINTS D'ACCÈS SANS FIL D'UN RESEAU DE COMMUNICATION ET DISPOSITIF GESTIONNAIRE DE CONNEXIONS ASSOCIE**
VERFAHREN ZUM UMSCHALTEN EINER MOBILSTATION ZWISCHEN ZWEI DRAHTLOSEN ZUGANGSPUNKTEN EINES KOMMUNIKATIONSNETZES UND ENTSPRECHENDE VORRICHTUNG ZUR VERBINDUNGSVERWALTUNG
METHOD FOR SWITCHING A MOBILE STATION BETWEEN TWO WIRELESS ACCESS POINTS OF A COMMUNICATION NETWORK AND ASSOCIATED CONNECTION MANAGEMENT DEVICE.

(30) Priorité: 22.09.2020 FR 2009585
(43) Date de publication de la demande: 23.03.2022
(73) Titulaire: Sagemcom Broadband SAS, 92270 Bois-Colombes (FR)
(72) Inventeur: DIONISI, Florent, 92500 Rueil Malmaison (FR)
(74) Mandataire: Cabinet Le Guen Maillet

(56) Documents cités:
- US-A1- 2004 266 474
- US-A1- 2007 217 383
- US-A1- 2019 124 570

## Description

### DOMAINE TECHNIQUE

La présente invention se rapporte à la gestion de ressources dans un réseau de communication sans fil, et en particulier à la gestion de l'itinérance d'une station mobile entre des points d'accès sans fil de ce réseau de communication.

### ETAT DE LA TECHNIQUE ANTERIEURE

La mise en place de réseaux locaux sans-fil WLAN (sigle de l'anglais « Wireless Local Area Network ») offre une grande flexibilité aux utilisateurs de dispositifs de communication nomades, tels que des ordinateurs, des tablettes, des téléphones intelligents ou *smartphones,* des objets connectés etc. De tels réseaux WLAN sont par exemple établis par des points d'accès intégrés dans des passerelles résidentielles RGW (du sigle anglais « Residential GateWay ») mis à disposition par des opérateurs de télécommunications, mais aussi via des dispositifs d'extension de la portée d'un tel réseau, ou encore via des dispositifs connectés au réseau, tels qu'un décodeur de télévision numérique, par exemple. Ainsi de nombreux points d'accès sans fil peuvent coexister dans un même réseau de communication local comprenant en outre d'éventuels points de connexion filaires. Des protocoles d'itinérance existent pour les stations connectées à des réseaux sans fil, permettant à ces stations de passer rapidement d'une connexion courante par le biais d'un premier point d'accès sans fil à une nouvelle connexion par le biais d'un autre point d'accès sans fil du même réseau. Souvent un tel basculement permet d'obtenir un signal plus puissant, ce qui est de nature à améliorer les performances globales des transmissions entre le point d'accès sans fil auquel une station est connectée et cette station. Ceci est d'autant plus vrai que la station est une station mobile, et que sa mobilité dans un réseau de communication sans fil est grande.

Les protocoles normalisés IEEE 802.11k et IEEE 802.11v sont conçus pour faciliter l'itinérance de stations mobiles se déplaçant à portée d'une pluralité de points d'accès d'un même réseau sans fil et étant compatibles avec les normes de transmissions sans fil IEEE 802.11 antérieures et postérieures.

Ainsi un protocole selon la norme IEEE 802.11k permet à une station mobile d'un réseau de communication sans fil IEEE 802.11 d'obtenir un rapport de voisinage comprenant des informations représentatives de l'environnement radiofréquences et un protocole selon la norme IEEE 802.1 1v permet en outre d'évaluer la connexion entre un point d'accès sans fil et une station mobile pour orienter la station vers un point d'accès déterminé, aux fins d'obtenir de meilleures performances de transmissions sans fil et/ou d'équilibrer la charge entre plusieurs points d'accès sans-fil. L'utilisation du protocole IEEE 802.11v permet ainsi de contraindre une station mobile compatible avec ce protocole à changer de point d'accès dans un réseau de communication, c'est-à-dire à basculer sa connexion d'un premier point d'accès à un réseau de communication vers un deuxième point d'accès à ce réseau de communication. Cependant certaines stations ne supportent pas ce protocole. Un autre mécanisme peut être utilisé, comme par exemple, l'introduction d'un identifiant d'une station dont il est question dans des listes de stations interdites de connexion dans certains des points d'accès d'un même réseau de communication, voire dans tous les points d'accès d'un réseau, sauf un, à savoir celui qui est sélectionné comme étant le meilleur point d'accès pour cette station mobile. Ce mécanisme présente l'inconvénient d'interrompre les communications en cours, et donc de présenter une gêne sensible pour un utilisateur de la station mobile dont la connexion est modifiée. Il arrive également qu'une station compatible avec le protocole IEEE 802.11v n'opère pas un basculement entre un premier point d'accès sans fil et un deuxième point d'accès sans fil, malgré le fait qu'un tel basculement lui ait été proposé ou demandé. La plupart des stations modernes implémentent le protocole IEEE 802.11v, mais intègrent souvent des mécanismes de décision propriétaires. Ces stations s'appuient sur leurs propres évaluations de la qualité des transmissions pour sélectionner un meilleur point d'accès sans fil à un réseau de communication. Le document US 2019/124570 A1 traite de la répartition de connexions entre des stations d'un réseau de communication hétérogène cellulaire et des terminaux de communication. Le document US 2004/266474 A1 traite de la sélection d'une station de base par un terminal utilisateur dans un réseau sans fil. Le document US 2007/217383 A1 traite d'une méthode de transfert de connexion dans un réseau sans fil. Bien qu'il existe de nombreuses méthodes pour faire basculer une station d'un point d'accès à un autre, la décision finale revient toujours à la station. La situation peut être améliorée.

### EXPOSE DE L'INVENTION

L'invention a pour but de forcer le basculement de connexion d'une station depuis un premier point d'accès sans fil d'un réseau de communication vers un deuxième point d'accès sans fil de ce réseau.

A cet effet, l'invention a pour objet un procédé de basculement de la connexion d'une station mobile, depuis un premier point d'accès sans-fil à un réseau de communication auquel la station mobile est connectée, vers un deuxième point d'accès sans-fil audit réseau, le procédé étant exécuté dans un dispositif dit « gestionnaire de connexions » dudit réseau de communication, le procédé comprenant :
- modifier une valeur d'un paramètre de transmission d'au moins le premier point d'accès sans fil, la valeur modifiée dudit paramètre étant de nature à dégrader les performances de transmission entre le premier point d'accès sans fil et la station mobile par rapport à une transmission basée sur la valeur dudit paramètre avant modification,
- transmettre vers la station mobile un message comprenant une proposition de connexion au deuxième point d'accès sans fil.

Un premier avantage est qu'il est possible de forcer un basculement de connexion d'une station en la « leurrant », c'est-à-dire en lui présentant des conditions de réception de signaux radioélectriques personnalisés pour contourner ses propres mécanismes propriétaires de sélection d'un meilleur point d'accès.

Un deuxième avantage est qu'il est possible d'avoir une gestion centralisée des connexions des différentes stations connectées au réseau de communication. La gestion étant alors centralisée par un dispositif « gestionnaire de connexions » implémenté dans un point d'accès sans fil du réseau de communication ou dans tout autre dispositif du réseau de communication configuré pour opérer des transmissions depuis et vers les points d'accès sans fil du réseau de communication et les stations connectées au réseau de communication.

Le procédé selon l'invention peut également comporter les caractéristiques suivantes, considérées seules ou en combinaison :
- Le paramètre de transmission modifié est un paramètre de modulation ou de puissance. Ainsi, il est possible d'agir sur les performances d'une transmission impliquant le premier point d'accès sans fil.
- Le procédé de basculement de la connexion comprend, préalablement à l'étape de modification d'une valeur d'un paramètre :
- sélectionner le deuxième point d'accès sans fil comme meilleur candidat pour une connexion sans fil de la station mobile audit réseau, le deuxième point d'accès sans fil étant sélectionné parmi une pluralité de points d'accès sans fil dudit réseau de communication, ladite pluralité de points d'accès sans fil comprenant au moins les premier et deuxième points d'accès sans fil, une évaluation du meilleur candidat avant sélection étant réalisée selon au moins un critère prédéterminé.

Il est ainsi possible de forcer une station mobile à se connecter au point d'accès déterminé comme étant le meilleur point d'accès sans fil pour une station donnée à un moment donné, en fonction de l'environnement radioélectrique, par exemple.
- Le au moins un critère prédéterminé de l'évaluation du meilleur candidat étant dans la liste :
- un nombre de stations connectées au premier point d'accès sans fil,
- un nombre de stations connectées au deuxième point d'accès sans fil,
- un nombre moyen de stations connectées par point d'accès sans fil audit réseau de communication,
- un indicateur de force de signal en réception représentatif d'un signal reçu par la station mobile lors d'une transmission à partir d'un point d'accès sans fil,
- un débit de transmission vers ou depuis la station mobile.

Ainsi, il est avantageusement possible d'organiser les différentes connexions des stations non pas seulement en fonction des performances de transmissions sur les liens de communications, mais également en fonction de critères tels que, par exemple, la charge d'un point d'accès sans fil ou les débits respectifs à travers les différents points d'accès sans fil, de sorte à optimiser la performance globale du réseau de communication.
- Le procédé de basculement de connexion comprend, préalablement à l'étape de sélection du deuxième point d'accès sans fil :
- obtenir depuis la station mobile, des informations représentatives de la perception des premier et deuxième points d'accès sans fil par la station mobile.
- Le procédé de basculement de connexion comprend en outre, postérieurement à la transmission vers la station mobile du message comprenant une proposition de connexion au deuxième point d'accès sans fil :
- détecter une connexion de la station mobile au deuxième point d'accès sans fil,
- enregistrer la valeur modifiée du paramètre de modulation ou de puissance de transmission pour laquelle la connexion de la station mobile au deuxième point d'accès sans fil a été opérée et détectée, l'enregistrement de la valeur modifiée étant réalisé en combinaison avec un identifiant de la station mobile propre à la station ou un identifiant de la station mobile vue dans le réseau de communication.

L'invention a également pour objet un dispositif dit « gestionnaire de connexions » d'un réseau de communication, ledit dispositif comprenant des circuits électroniques et/ou radioélectriques configurés pour :
- modifier une valeur d'un paramètre de modulation ou de puissance de transmission d'au moins un premier point d'accès sans fil au réseau, la valeur modifiée du paramètre étant de nature à dégrader des performances de transmission entre le premier point d'accès sans fil et une station mobile connectée à ce premier point d'accès sans fil, par rapport à une transmission opérée basée sur la valeur du paramètre avant modification,
- transmettre vers la station mobile un message comprenant une proposition de connexion à un deuxième point d'accès sans fil.

Un autre objet de l'invention est un dispositif point d'accès sans fil à un réseau de communication comprenant un dispositif gestionnaire de connexions selon la revendication précédente.

L'invention concerne de plus un réseau de communication comprenant un dispositif gestionnaire de connexions tel que précédemment décrit ou un dispositif point d'accès sans fil comprenant un dispositif gestionnaire de connexions tel que précité.

L'invention concerne enfin un produit programme d'ordinateur comprenant des instructions de codes de programme pour exécuter les étapes du procédé précédemment décrit, lorsque le programme est exécuté par un processeur ainsi qu'un support de stockage d'informations comprenant un tel produit programme d'ordinateur.

L'invention concerne de plus un produit programme d'ordinateur comprenant des instructions de codes de programme pour exécuter les étapes du procédé précédemment décrit lorsque le programme est exécuté par un processeur, ainsi qu'un support de stockage d'informations comprenant un tel produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau de communication local domestique comprenant une pluralité de points d'accès sans fil au réseau et un dispositif gestionnaire de connexions configuré pour exécuter un procédé de basculement forcé de la connexion d'une station mobile selon un mode de réalisation ;
[Fig. 2] est un ordinogramme illustrant des étapes d'un procédé de basculement forcé d'une station mobile depuis un premier point d'accès sans fil vers un deuxième point d'accès sans fil, selon un mode de réalisation, tel qu'exécuté par le dispositif gestionnaire de connexions du réseau représenté sur la Fig. 1 ;
[Fig. 3] est un ordinogramme illustrant une première variante d'un procédé représenté sur la Fig. 2 de basculement forcé d'une station mobile ;
[Fig. 4] est un ordinogramme représentant une seconde variante d'un procédé représenté sur la Fig.2 de basculement forcé d'une station mobile ; et,
[Fig. 5] est un diagramme de principe illustrant une architecture d'un dispositif gestionnaire de connexions configuré pour forcer un basculement de connexion d'une station mobile connectée au réseau de communication de la Fig. 1 selon un mode de réalisation.

### EXPOSE DETAILLE DE MODES DE REALISATION

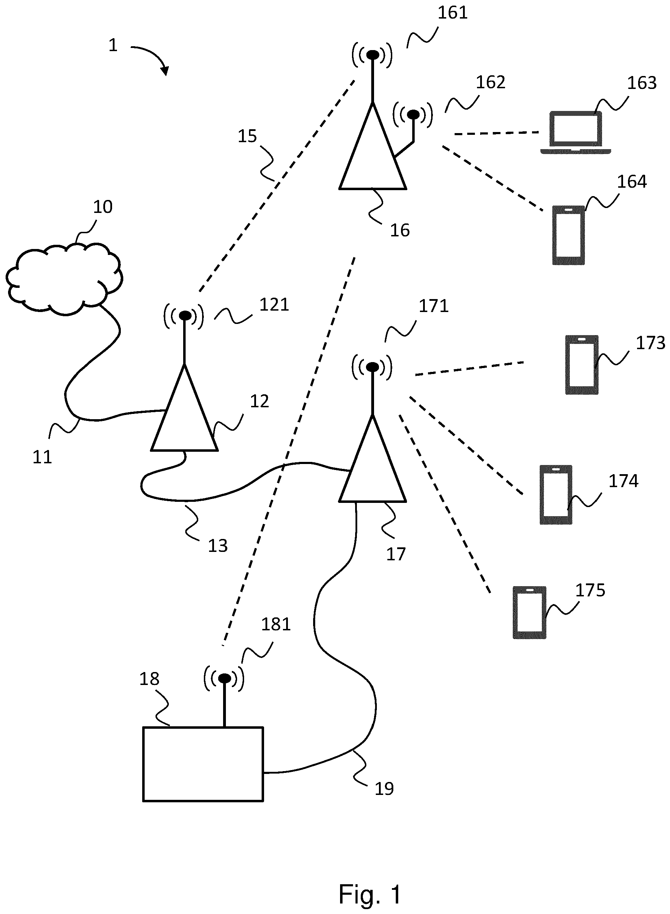

La Fig. 1 illustre schématiquement un réseau de communication 1 de type réseau local comprenant un système d'extension de couverture de communication sans-fil. Par exemple, le réseau de communication 1 est un réseau domestique. Le réseau de communication 1 est connecté à un réseau étendu 10. Selon un mode de réalisation, le réseau étendu 10 est le réseau internet. Le réseau de communication 1 est connecté au réseau étendu 10 grâce à une passerelle réseau 12 configurée pour implémenter l'ensemble des fonctions utiles à une connexion entre un réseau étendu et un réseau local. La passerelle réseau 12, encore communément appelée « gateway», est connectée au réseau étendu 10 par l'intermédiaire d'un lien de connexion 11. Le lien de connexion 11 est, par exemple, une ligne d'abonné au téléphone, et la connexion utilise par exemple une technologie ADSL (sigle anglais pour « Asymmetric Digital Subscriber Line » et qui signifie « ligne d'abonné numérique et asymétrique »), une connexion de type fibre optique ou encore une liaison sans-fil de type accès sans-fil fixe ou « fixed wireless access » reposant sur des technologies d'accès 4G et/ou 5G par exemple. La passerelle réseau 12 comprend une ressource radio 121 et une interface filaire Ethernet (non représentée sur la figure) pour une connexion à un réseau local, et opère des fonctions de noeud de communication. Le réseau de communication 1 comprend en outre deux autres noeuds de communication 16 et 17. Selon un mode de réalisation, le noeud de communication 17 est un dispositif électronique de type récepteur-décodeur de télévision numérique communément appelé « set-top box », qui comprend lui aussi une interface de connexion Ethernet (non représentée sur la figure), pour une connexion à un réseau local, et le noeud de communication 16 est un répéteur de réseau local sans fil se présentant sous la forme d'une borne relais WiFi pour réseau de communication local sans fil. Selon un mode de réalisation, le noeud de communication 16 est relié à la passerelle réseau 12 par l'intermédiaire d'un lien de communication sans fil 15 et le noeud de communication 17 est relié à la passerelle de communication 12 par l'intermédiaire d'un lien filaire 13. Le noeud de communication 17 comprend une ressource radio 171 et le noeud de communication 16 comprend deux ressources radio 161 et 162. Les noeuds de communication 16 et 17 sont configurés pour des communications avec la passerelle réseau 12 et constituent un sous réseau d'acheminement « backhaul » du réseau de communication 1. Les ressources radio 162 et 171 sont configurées chacune pour opérer des fonctions de point d'accès sans fil au réseau de communication 1.

Des stations mobiles 163, 164, 173, 174 et 175 sont connectées au réseau de communication 1 par le biais des points d'accès sans fil 162 et 171. Les stations mobiles 163 et 164 sont connectées au réseau de communication 1 par l'intermédiaire du point d'accès sans fil 162 du noeud de communication 16, et les dispositifs utilisateurs 173, 174 et 175 sont connectés au réseau de communication 1 par l'intermédiaire du point d'accès sans fil du noeud de communication 17. Selon un mode de réalisation, les stations mobiles 164, 173, 174 et 175 sont des dispositifs téléphones intelligents, encore communément appelés *smartphones,* et la station mobile 163 est un ordinateur portable encore communément appelé *laptop.* Les liaisons entre points d'accès sans fil des noeuds de communication 16 et 17 et les stations mobiles 163, 164, 173, 174 et 175 constituent un sous-réseau utilisateur dit sous-réseau « frontal » ou « fronthaul » du réseau de communication 1. Selon un mode de réalisation, tous les noeuds de communication du réseau local 1, à savoir la passerelle réseau 12, la set-top box 17 et la borne relais 16, ainsi que les dispositifs utilisateurs 163, 164, 173, 174 et 175 sont configurés pour opérer des communications sans fil selon des caractéristiques et protocoles conformément à l'une des normes IEEE 802.11.

Selon un mode de réalisation, le réseau de communication 1 comprend en outre un dispositif gestionnaire de connexions 18 configuré pour gérer l'ensemble des connexions sans fil entre les stations mobiles 163, 164, 173, 174 et 175 et les points d'accès sans fil 162 et 171 du sous réseau frontal. Selon un mode de réalisation de l'invention, le dispositif gestionnaire de connexions 18 est configuré pour communiquer avec les points d'accès sans fil 162 par l'intermédiaire d'une ressource radio 181 connectée par liaison sans fil à la ressource radio 161 du noeud de communication 16 et avec le point d'accès sans fil 171 par l'intermédiaire d'une connexion filaire 19 de type Ethernet. Ainsi, le dispositif gestionnaire de connexions 18 est inséré dans le sous-réseau d'acheminement du réseau de communication 1. Selon des variantes, les liens de communication entre le dispositif gestionnaire de connexions 18 et les points d'accès sans fil 162 et 171 du sous-réseau frontal du réseau de communication 1 peuvent être implémentés différemment. Par exemple, le noeud de communication 17 peut comprendre une ressource radio supplémentaire connectée à la ressource radio 181 du dispositif gestionnaire de connexions 18 pour établir un lien de communication sans fil utilisable à la place du lien filaire 19.

Dans un mode de réalisation, le dispositif gestionnaire de connexions 18 est une entité comprise dans la passerelle réseau 12. Cet arrangement permet une centralisation simplifiée de la gestion des connexions.

Dans un autre mode de réalisation, le dispositif gestionnaire de connexions 18 est une entité comprise dans l'un des noeuds du réseau de communication 1, tel que le noeud de communication 16 ou le noeud de communication 17. Cet arrangement permet d'avoir une gestion des connexions sur l'un des noeuds offrant un sous-réseau « frontal ».

Dans un autre mode de réalisation, certains dispositifs du réseau de communication 1 comprennent respectivement chacun un dispositif gestionnaire de connexions 18. Ces dispositifs gestionnaires de connexions 18 coopèrent ensemble de façon distribuée ou selon un mode maître-esclaves. Cet arrangement permet de répartir les opérations de gestion des connexions à travers les dispositifs du réseau de communication 1.

Avantageusement, dans un mode de réalisation, le dispositif gestionnaire de connexions 18 est configuré pour la réalisation et le contrôle d'échanges protocolaires selon les protocoles IEEE 802.11 k et IEEE 802.11v entre les points d'accès sans fil 162 et 171 d'une part et les stations mobiles 163, 164, 173, 174 et 175 d'autre part. Ainsi, le dispositif gestionnaire de connexions 18 est apte à superviser des échanges protocolaires selon les protocoles IEEE 802.11k et IEEE 802.11v avec chacune des stations mobiles 163, 164, 173, 174 et 175, via l'un ou l'autre des points d'accès sans fil 162 et 171, ou encore directement en opérant des fonctions de points d'accès sans fil par le biais de sa propre ressource radio 181. Dans un autre mode de réalisation, indépendamment ou en complément des protocoles IEEE 802.11k et IEEE 802.11v, le gestionnaire de connexions 18 est apte à superviser des échanges protocolaires selon le protocole IEEE 802.11r avec chacune des stations mobiles 163, 164, 173, 174 et 175.

Avantageusement, dans un mode de réalisation, le dispositif gestionnaire de connexions 18 peut obtenir, via les protocoles IEEE 802.11k et/ou IEEE 802.11v ou via un autre type de procédure de collecte adaptée, telle qu'avec des étapes protocolaires du protocole IEEE 802.11r, un état de perception des différents points d'accès sans fil 162 et 171 vu de chacune des stations mobiles 163, 164, 173, 174 et 175 et analyser la situation globale ou la situation pour chacune des stations mobiles considérée indépendamment des autres. Ainsi, le dispositif gestionnaire de connexions 18, opérant une gestion centralisée des connexions, peut déterminer si une connexion à un point d'accès sans fil est plus opportune à un instant donné, pour une station mobile donnée, qu'une connexion à un autre point d'accès sans fil. Par exemple, si le dispositif gestionnaire de connexions 18 détermine à partir d'informations obtenues que la station mobile 164 bénéficie d'un niveau de signal de réception plus fort à partir du point d'accès sans fil 171 qu'à partir du point d'accès sans fil 162, le dispositif gestionnaire peut solliciter un basculement de la connexion sans-fil de la station mobile 164 depuis le point d'accès sans fil 162 vers le point d'accès sans fil 171, par l'émission d'un message en ce sens selon le protocole IEEE 801.11v dans un exemple.

Selon un mode de réalisation de l'invention, le dispositif gestionnaire de connexions 18 est configuré pour forcer le basculement sollicité de la station mobile 164 si cette dernière n'opère pas le basculement de connexion sollicité en réponse à un message protocolaire précédemment émis. Astucieusement, le dispositif gestionnaire 18 contrôle une transmission de signaux depuis le point d'accès sans fil à quitter (en l'occurrence, le point d'accès sans fil 162) et depuis le point d'accès sans fil à rejoindre (en l'occurrence, le point d'accès sans fil 171), à destination de la station mobile concernée (ici, la station mobile 164) pour forcer la station à constater que le meilleur choix de connexion est celui qui a été sollicité, bien que celle-ci n'ait pas réagi à la sollicitation en vue d'un basculement de connexion.

Pour ce faire et selon un premier mode de réalisation, le dispositif gestionnaire de connexions 18 opère, par exemple, une reconfiguration du point d'accès auquel la station mobile 164 est connectée par modification de la valeur d'un paramètre de transmission du point d'accès sans fil 162 de sorte que la valeur modifiée du paramètre soit de nature à dégrader les performances de transmission entre le point d'accès sans fil 162 et la station mobile 164 par rapport aux performances courantes, c'est-à-dire par rapport aux performances de transmission observées avant la modification de la valeur dudit paramètre. Dans un exemple, le paramètre dont la valeur est modifiée est relatif à la modulation de la transmission. Dans un autre exemple, le paramètre dont la valeur est modifiée est relatif à la puissance de la transmission. Encore dans un autre exemple le paramètre dont la valeur est modifiée est un paramètre de la couche physique dite « PHY », ou un paramètre de la couche de niveau 2 dite « MAC », ou un paramètre d'une couche supérieure, ledit paramètre étant susceptible d'influer sur les performances de transmission entre le point d'accès sans fil 162 et la station mobile 164 (un nombre de retransmissions configurable sur la couche de niveau 2 ou de niveau 3 par exemple, la valeur d'un délai de déclenchement ou d'expiration d'évènement dit « *timer* » par exemple, un seuil de déclenchement dit « *threshold »* dans un autre exemple). Selon une variante, le dispositif gestionnaire de connexions 18 modifie la valeur de plusieurs paramètres, tels que les paramètres de modulation et/ou de puissance dans un exemple. Le dispositif gestionnaire de connexions 18 transmet ensuite, vers la station mobile 164, un nouveau message protocolaire comprenant une proposition de connexion au point d'accès sans fil 171.

Ainsi, la modification effectuée à partir des résultats d'analyse de mesures préalables opérées en utilisant le protocole IEEE 802.11k, par exemple, il est possible d'influencer la station mobile 164 en agissant sur son mode de décision quel qu'il soit (par exemple, un mode de décision propriétaire défini par le constructeur de la station mobile 164). Une telle modification d'une valeur de paramètre de transmission peut concerner, par exemple, un paramètre des protocoles 11n, 11ac et 11ax de l'une des normes IEEE 802.11. Ainsi, au moins un mode de réalisation de la présente invention concerne un procédé de basculement forcé de la connexion d'une station mobile depuis un premier point d'accès sans fil d'un réseau de communication à un deuxième point d'accès sans fil de ce réseau. Au moins un mode de réalisation concerne un procédé de basculement de la connexion d'une station mobile, forcé par une dégradation délibérée des performances d'une transmission vers la station.

Selon un mode de réalisation, des modifications successives de la valeur d'un paramètre sont effectuées progressivement jusqu'à obtenir un basculement de la connexion de la station mobile concernée vers le point d'accès sans fil ciblé. Avantageusement, lorsqu'un basculement de la connexion d'une station mobile est ainsi opéré et détecté, depuis un premier point d'accès sans fil vers un deuxième point d'accès sans fil, la valeur du paramètre de transmission modifié ayant entraîné le basculement de connexion peut être enregistrée dans une base de données, combinée à un identifiant de la station mobile. Il est ainsi avantageusement possible de réaliser un apprentissage du comportement de chacune des stations mobiles présentes dans un réseau de communication aux fins de mieux prévoir le comportement futur d'une station mobile en réponse à une modification de paramètre. Avantageusement, un tel mode opératoire permet d'accélérer un basculement forcé de la connexion d'une station mobile lorsqu'un tel basculement est jugé nécessaire par le dispositif gestionnaire de connexions 18.

Selon un deuxième mode de réalisation, le dispositif gestionnaire de connexions 18 adresse un message à la station mobile 164 pour laquelle il a analysé qu'un basculement de connexion est souhaitable ou requis, depuis le premier point d'accès sans fil 162 vers le deuxième point d'accès sans fil 171, ce message étant configuré pour demander à la station mobile 164 d'effectuer un balayage (ou *scan*) actif via une émission d'un message *probe request.* Dans le même temps, le gestionnaire de connexions 18 opère une reconfiguration des points d'accès sans fil autres que le point d'accès sans fil 171 ciblé. En effet, l'émission d'un message *probe request* selon un protocole IEEE802.11 permet à une station désireuse de se connecter à un réseau, d'obtenir des informations de la part des différents points d'accès sans fil à portée de cette station. En procédant ainsi, le gestionnaire de connexions 18 leurre là aussi la station mobile 164, en lui présentant des performances délibérément dégradées de la part de tous les points d'accès sauf du point d'accès 171 ciblé. En l'occurrence, dans l'exemple présenté, le dispositif de gestion de connexions 18 reconfigure une valeur d'un paramètre de transmission, tel qu'un paramètre relatif à la modulation ou à la puissance du point d'accès sans fil 162, de sorte que la station mobile 164 perçoive de meilleures conditions de connexion de la part du point d'accès sans fil 171 que de la part du point d'accès sans fil 162. La station mobile 164 ne peut alors que choisir le point d'accès sans fil 171 pour l'établissement d'une nouvelle connexion et un basculement de connexion entre le premier point d'accès sans fil 162 et le deuxième point d'accès sans fil 171 est opéré. Bien évidemment, une modification progressive d'un paramètre peut également être utilisée selon ce mode de réalisation, de sorte à identifier une valeur seuil du paramètre de transmission pour laquelle la station mobile 164 a opéré un basculement, ce qui permet d'enregistrer cette valeur seuil en combinaison avec un identifiant de la station mobile 164 et d'alimenter une base de données d'apprentissage pour pouvoir accélérer un futur basculement, fort de la connaissance acquise du comportement de la station mobile forcée à opérer un basculement de connexion.

Selon un troisième mode de réalisation, le dispositif gestionnaire de connexions 18 reconfigure la puissance d'émission des trames *beacon* émises par le point d'accès 162, de sorte que cette puissance demeure acceptable pour les autres stations mobiles qui y sont connectées (ici, en l'occurrence, la station mobile 163) mais de sorte que les trames *beacon* émises par le point d'accès sans fil 162 ne soient plus perceptibles par la station mobile 164. La puissance d'émission des trames *beacon* des autres points d'accès sans fil restant inchangée, dont ici notamment le point d'accès sans fil 171, la station mobile 164 perd de vue le point d'accès sans fil 162 et n'a d'autre solution que de se connecter au point d'accès sans fil 171. Ainsi le gestionnaire de connexions 18 opère là-aussi un basculement forcé de la station mobile 162 depuis le premier point d'accès sans fil 162 vers le deuxième point d'accès sans fil 171.

Selon un quatrième mode de réalisation, le dispositif gestionnaire de connexions 18 reconfigure la puissance d'émission des trames *beacon* émises par le point d'accès 171. Par exemple, le dispositif gestionnaire de connexions 18 configure temporairement à la hausse la puissance d'émission des trames *beacon* émises par le point d'accès 171. Ainsi la station mobile 164 détecte que le point d'accès 171 offre des conditions de transmission plus favorables que celles du point d'accès 162.

Dans d'autres modes de réalisation, le dispositif gestionnaire de connexions 18 combine les différents ajustements de valeur de paramètre de transmission. Par exemple, le dispositif gestionnaire de connexions 18 reconfigure une valeur de paramètre de transmission du point d'accès 162 (par exemple en baissant sa puissance de transmission) et reconfigure une valeur de paramètre de transmission du point d'accès 171 (par exemple en augmentant sa puissance de transmission). Dans d'autres exemples, le gestionnaire de connexions 18 combine des reconfigurations de valeurs d'autres paramètres susceptibles d'influer sur la transmission entre une station mobile et un point d'accès sans fil.

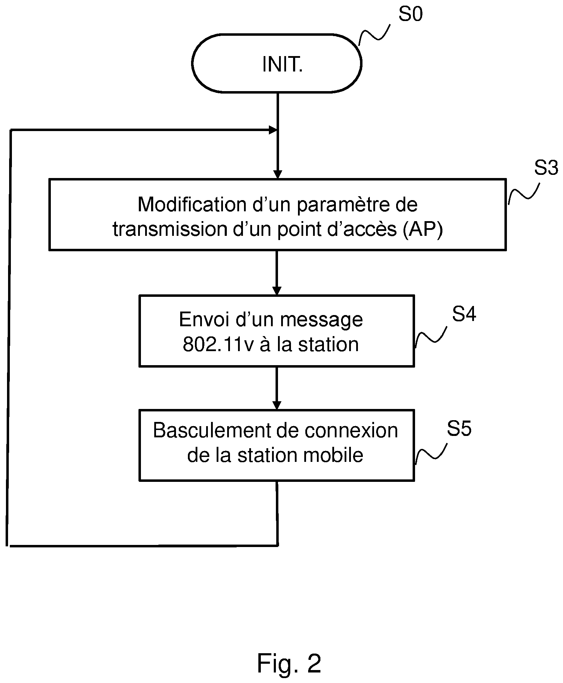

La Fig. 2 est un ordinogramme illustrant des étapes essentielles du procédé de basculement de la connexion de la station mobile 164, exécuté par le gestionnaire de connexions 18. Le procédé illustré opère un basculement de connexion de la station mobile 164 depuis le premier point d'accès sans fil 162 au réseau de communication 1, auquel la station mobile 164 est initialement connectée, vers le deuxième point d'accès sans fil au réseau de communication 1.

Une étape S0 correspond à un fonctionnement nominal des différents dispositifs du réseau de communication 1 au terme d'une initialisation de tous les dispositifs présents dans le réseau. En d'autres termes, l'ensemble des dispositifs représentés sur la Fig. 1 coexistent dans le réseau de communication 1 et opèrent des transmissions requises selon le fonctionnement propre à chaque station mobile, ainsi qu'aux dispositifs noeuds de communication du réseau de communication 1. A ce stade, après avoir déterminé qu'un basculement de connexion de la station mobile 164 est souhaitable ou requis, par une analyse de la situation de l'ensemble des connexions des stations mobiles connectées au réseau de communication 1, le dispositif gestionnaire de connexions 18 adresse un message selon le protocole IEEE 802.11v à la station mobile 164, lequel message comprend une invitation à se connecter au point d'accès sans fil 171, plutôt qu'au point d'accès sans fil 164. Si la station mobile 164 est compatible avec le protocole IEEE 802.11v et que son comportement en termes de connexion (ou de préférences de connexion) n'est pas guidé par un algorithme propriétaire, la station se connecte au point d'accès sans fil 171, conformément à la sollicitation qui lui a été adressée par le dispositif gestionnaire de connexions 18. Dans le cas contraire, le gestionnaire de connexions 18 initie à l'étape S3 un basculement forcé de la connexion de la station mobile 164, depuis le point d'accès sans fil 162 vers le point d'accès sans fil 171. Par exemple, le dispositif gestionnaire de connexions 18 peut définir un mode opératoire pour forcer le basculement de connexion à partir des informations précédemment renseignées dans une base de données d'apprentissage et qui permettent de connaître ou de prévoir le comportement « moyen » d'une station mobile qui avait déjà été connectée ou encore qui est identifiée par le biais d'un identifiant constructeur propre à ce type de station mobile. Ainsi le dispositif gestionnaire de connexions 18 choisit, par exemple, en fonction des informations dont il dispose en lien avec la station mobile 164, notamment dans sa base de données d'apprentissage, une « stratégie » de basculement parmi les différentes possibilités que sont :
- une modification d'une valeur d'un paramètre d'émission ou de transmission du point d'accès sans fil 162 courant, de sorte à dégrader délibérément les performances de transmissions entre le point d'accès courant 162 et la station mobile 164,
- une demande à la station mobile 164 d'opérer un balayage (*scan*) actif via une émission de trames de type *probe request,* associé à une baisse de la puissance d'émission des points d'accès sans fil autres que le point d'accès sans fil 171, cible du basculement, ou,
- une modification de la puissance d'émission des trames *beacon* depuis les différents points d'accès sans fil autres que le point d'accès sans fil 171, cible du basculement.

Préférentiellement, le gestionnaire de connexions 18 modifie, lors de l'étape S3, une valeur d'un paramètre de transmission du point d'accès sans fil 162 de sorte à dégrader les performances de transmission entre le premier point d'accès sans fil 162 et la station mobile 164 par rapport à une transmission basée sur la valeur dudit paramètre avant modification. Par exemple, la puissance en émission du signal émis par le point d'accès sans fil est diminuée. Ensuite, et quelle que soit la stratégie opérée, le dispositif gestionnaire de connexions transmet vers la station mobile 164, lors d'une étape S4, un nouveau message comprenant une nouvelle proposition de connexion de la station mobile 164 au deuxième point d'accès sans fil 171.

Finalement, que ce soit du fait d'une compatibilité à un protocole IEEE 802.11v ou encore selon les préférences de connexion implémentées par un algorithme propriétaire, la station mobile 164 n'a d'autre choix que de se connecter, lors d'une étape S5, au deuxième point d'accès sans fil 171, si la dégradation délibérée des performances est suffisamment conséquente pour entraîner un basculement de connexion.

Ainsi, astucieusement, et selon l'invention, une modification suffisante d'une valeur d'un paramètre de transmission du premier point d'accès sans fil 162 ou encore de tous les points d'accès sans fil disponibles autres que le deuxième point d'accès sans fil 171, cible du basculement de connexion souhaité ou requis, de nature à dégrader les performances de transmission entre le premier point d'accès sans fil 162 et la station mobile 164 par rapport à une transmission basée sur la valeur dudit paramètre avant modification, suivie de la transmission vers la station mobile 164 concernée d'un message comprenant une proposition de connexion au deuxième point d'accès sans fil 171, suffit à forcer un basculement de la connexion de la station mobile 164 concernée vers le point d'accès sans fil cible 171.

Les termes « modification suffisante d'une valeur d'un paramètre de modulation ou de puissance » sont à interpréter ici comme une modification de la valeur entraînant une dégradation de performances de transmission telle qu'un basculement de connexion a lieu, que cette modification de valeur de paramètre concerne, par exemple, la puissance d'émission du signal ou encore la puissance d'émission de trames *beacon.* Dans un autre exemple, la valeur du paramètre de modulation est augmentée, c'est-à-dire que la valeur représentative du schéma de codage de modulation dit « Modulation and Coding Scheme » ou « MCS » est modifiée pour passer d'un codage robuste dit « Quadrature Phase Shift Keying » ou « QPSK » à un codage dit « Quadrature Amplitude Modulation » ou « QAM » moins robuste que le schéma « QPSK » mais offrant un meilleur débit symbole. Le schéma « QAM » étant moins robuste, et avec une puissance de transmission inchangée et adaptée à une transmission « QPSK », des dégradations, telles que des erreurs lors du décodage des paquets transmis, sur la transmission entre la station mobile 164 et le point d'accès sans fil 162 sont attendues. Dans un autre exemple, la valeur du nombre maximum de retransmissions d'un paquet transmis est modifiée à la baisse. Typiquement un paquet peut être retransmis 4 ou 5 fois, ces différentes retransmissions pouvant être combinées dans le récepteur de la station mobile 164 (respectivement dans le récepteur du point d'accès sans fil 162) afin d'en améliorer les chances de décodage. En baissant le nombre maximum de retransmissions d'un paquet, les chances de décodage avec succès d'un paquet diminuent, entraînant ainsi des dégradations sur la transmission entre la station mobile 164 et le point d'accès sans fil 162.

Selon une variante du mode de réalisation, le dispositif gestionnaire 18 opère par modifications successives de la valeur d'un paramètre de transmission, de sorte que le basculement n'ait pas forcément lieu immédiatement après une première modification de valeur du paramètre, mais après une série de modifications successives ayant entraîné une dégradation progressive des transmissions entre le premier point d'accès sans fil 162 et la station mobile 164. Avantageusement, cette variante permet de définir un seuil de basculement de la connexion en corrélation avec le paramètre de transmission utilisé (modifié) pour opérer un basculement forcé. Dans le cas où une modification de valeur d'un paramètre n'est pas suffisante, le procédé peut prévoir d'opérer une modification de la valeur d'un ou plusieurs paramètres supplémentaires de transmission.

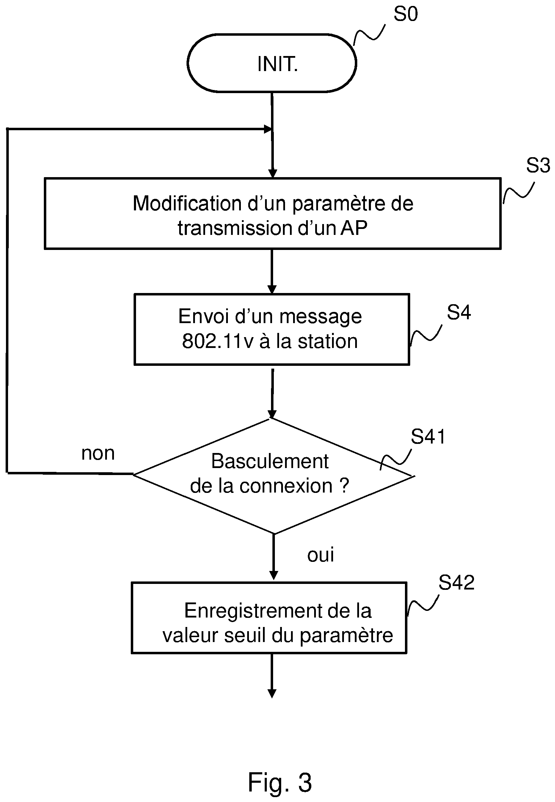

La Fig.3 représente une première variante d'un procédé de basculement forcé pour laquelle un rebouclage est opéré autour des étapes S3 de modification d'une valeur d'un paramètre de d'émission du point d'accès sans fil 162 et S4 d'envoi d'un message protocolaire comprenant une invitation à se connecter au point d'accès sans fil 171, cible du basculement. Selon cette variante, lors d'une étape S41 qui fait suite à l'étape S4, une détection de basculement de la connexion de la station mobile 164 est opérée. Dans le cas où le basculement de la connexion a eu lieu vers le point d'accès sans fil 171, la valeur de paramètre ayant permis d'aboutir à un basculement de connexion est enregistrée dans une base de données d'informations représentatives du comportement des différentes stations mobiles, face à des messages protocolaires selon la norme IEEE 802.11v ou encore face à des procédés de basculement de connexion forcé exécutés selon les modes opératoires décrits ici. Ainsi le gestionnaire de connexions 18 dispose avantageusement d'une base de données de comportement permettant d'ajuster au mieux la valeur d'un paramètre de transmission modifié, lorsqu'un basculement de connexion rapide est souhaité. Avantageusement le procédé représenté sur la Fig.3 peut inclure une supervision par le dispositif gestionnaire de connexions 18, de la perception qu'a la station mobile 164 concernée, grâce à des messages protocolaires définis selon la norme IEEE 802.11k. Par exemple, le dispositif gestionnaire de connexions 18 peut adresser régulièrement, voire à chaque itération de la boucle formée par les étapes S3, S4 et S41, un message aux fins de connaître une estimation du signal perçu par la station mobile 164, tel que le « Received Signal Strength Indicator » ou « RSSI » du signal émis par le premier point d'accès 162 et vu de la station mobile 164 ou encore un message aux fins de connaître le RSSI du signal émis par le deuxième point d'accès 171, ou les deux, tout au long de la dégradation progressive et délibérée de performances de transmissions vers la station mobile 164.

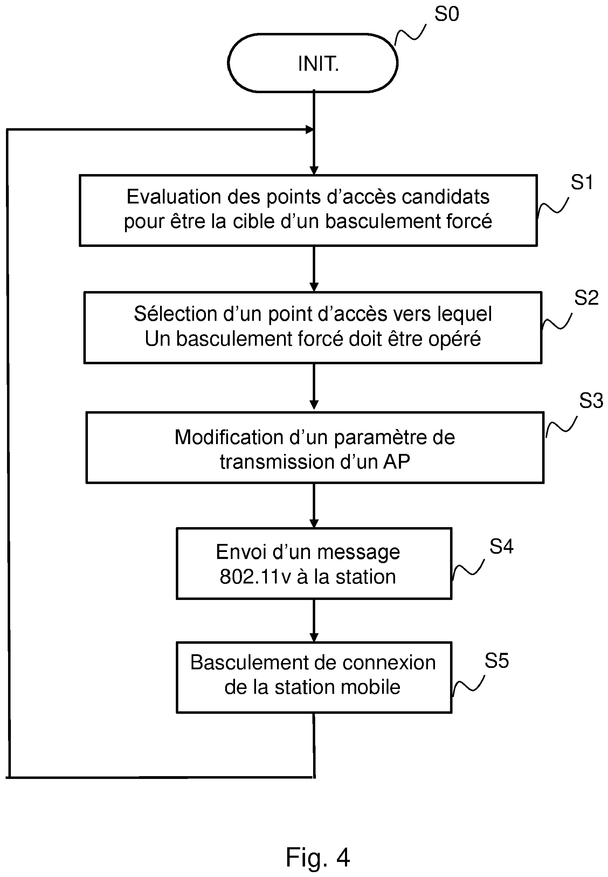

La Fig. 4 représente une seconde variante du mode de réalisation d'un procédé de basculement forcé de la connexion de la station mobile 164 au réseau de communication déjà illustré sur la Fig. 2. Le procédé décrit selon cette variante comprend, préalablement à l'étape S3 de modification d'un paramètre de transmission du premier point d'accès 162, une étape de sélection S2 du deuxième point d'accès sans fil 171 lors de laquelle ce deuxième point d'accès sans fil 171 est défini comme étant le meilleur candidat pour une connexion sans fil de la station mobile 164 au réseau de communication 1.

Lors de cette étape S2, le deuxième point d'accès sans fil 171 est sélectionné parmi la pluralité de points d'accès sans fil 162 et 171, et éventuellement un ou plusieurs autres points d'accès sans fil disponibles mis en oeuvre dans le réseau de communication 1.

La sélection du deuxième point d'accès sans fil 171 comme cible d'un basculement, réalisé lors d'une étape de sélection S2, peut s'inscrire dans une analyse contextuelle propre au comportement ou aux performances de la seule station mobile 164, ou encore une analyse contextuelle de l'environnement proche de cette station mobile 164 (notamment l'environnement radioélectrique, ou encore une analyse contextuelle de l'ensemble du réseau de communication 1 ou de l'un de ses sous-ensembles (sous-réseau frontal, par exemple). Ainsi, une telle sélection peut découler d'une étape d'évaluation S1 des points d'accès du réseau de communication 1 candidats pour être la cible d'un basculement forcé. Cette étape d'évaluation S1 est préalable à l'étape de sélection S2, et vise à analyser par exemple les performances des transmissions opérées ou encore d'autres aspects tels que la charge de chacun des points d'accès sans-fil, ou de chacun des points d'accès (sans fil ou filaire), un nombre de connexions détectées sur chacun des points d'accès, un nombre de connexions moyen par point d'accès ou par point d'accès sans fil, un débit de transmission sur un quelconque lien de communication du réseau de communication, notamment depuis ou vers une station mobile, un indicateur d'un niveau en réception de la force du signal transmis par un point d'accès sans fil vu d'une station mobile (par exemple un RSSI) ; ces exemples n'étant pas limitatifs. Ainsi chacun de ces éléments peut servir de critère d'évaluation de la situation d'une ou plusieurs stations mobiles, considéré seul ou en combinaison avec un ou plusieurs autres éléments listés ci-avant.

Avantageusement, afin de pouvoir disposer d'informations détaillées pour évaluer la situation d'une ou plusieurs stations mobiles telles que par, exemple la station mobile 164, le dispositif gestionnaire de connexions 18 utilise des messages protocolaires selon la norme IEEE 802.11k pour obtenir depuis la station mobile 164, des informations représentatives de la perception des premier et deuxième points d'accès sans fil 162 et 171, par la station mobile 164. Selon un mode de réalisation, le dispositif gestionnaire de connexions 18 opère la transmission de ces messages via les points d'accès sans fil 162 et/ou 171. Avantageusement, le dispositif gestionnaire de connexions 18 utilise des mécanismes décrits dans la norme IEEE 802.11 tels que les mécanismes dits de « *radio measurements* » indiqués au paragraphe 4.3.11 de la norme IEEE 802.11 actuelle.

Bien évidemment, les première et seconde variantes décrites ne sont pas exclusives et peuvent être combinées entre elles.

D'autre part, ces première et seconde variantes décrites peuvent également être réalisées selon le protocole IEEE 802.11r.

L'étape d'évaluation S1 des points d'accès du réseau de communication candidats pour être la cible d'un basculement forcé peut comprendre une étape d'analyse du comportement d'une ou de plusieurs stations mobiles connectées au réseau de communication 1, notamment dans le but d'identifier une ou plusieurs stations candidates à un déplacement dans le réseau. Cette étape d'analyse du comportement d'une station mobile peut reposer sur :
- la détection que cette station mobile répond positivement à une demande de basculement mais ne l'opère pas, et/ou,
- la détection que cette station mobile est compatible avec le protocole de basculement, mais répond avec un message d'erreur à une demande de basculement, et/ou,
- la détection d'un basculement à l'initiative de la station mobile.

Le terme « déplacement » est à interpréter ici comme un basculement de la connexion d'une station identifiée depuis un premier point d'accès vers un deuxième point d'accès, suite à un message protocolaire selon IEEE 802.1 1v, ou encore du fait d'un basculement forcé selon un mode de réalisation précédemment décrit.

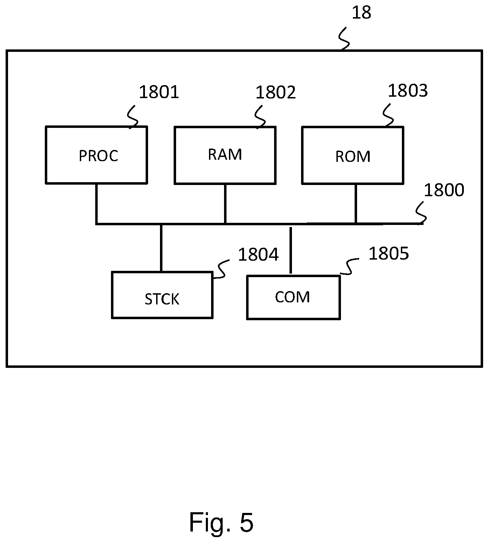

La Fig. 5 illustre schématiquement un exemple d'architecture interne de tout dispositif point gestionnaire de connexions. Considérons à titre illustratif que la Fig. 5 illustre un agencement interne du dispositif gestionnaire de connexions 18. On note que la Fig. 5 pourrait aussi illustrer schématiquement un exemple d'architecture matérielle d'un module de traitement compris dans le dispositif gestionnaire de connexions 18 ou encore un dispositif point d'accès sans fil comprenant le dispositif gestionnaire de connexions 18. Selon l'exemple d'architecture matérielle représenté à la Fig. 5, le dispositif gestionnaire de connexions 18 comprend alors, reliés par un bus de communication 1800 : un processeur ou CPU (« Central Processing Unit » en anglais) 1801 ; une mémoire vive RAM (« Random Access Memory » en anglais) 1802 ; une mémoire morte ROM (« Read Only Memory » en anglais) 1803 ; une unité de stockage telle qu'un disque dur (ou un lecteur de support de stockage, tel qu'un lecteur de cartes SD (« Secure Digital » en anglais) 1804 ; au moins une interface de communication 1805 permettant au dispositif gestionnaire de connexions 18 de communiquer avec des dispositifs présents dans le réseau de communication 1, tels que par exemple, les points d'accès sans fil 162 et 171.

Le processeur 1801 est capable d'exécuter des instructions chargées dans la RAM 1802 à partir de la ROM 1803, d'une mémoire externe (non représentée), d'un support de stockage (tel qu'une carte SD), ou d'un réseau de communication. Lorsque le dispositif gestionnaire de connexions 18 est mis sous tension, le processeur 1801 est capable de lire de la RAM 1802 des instructions et de les exécuter. Ces instructions forment un programme d'ordinateur causant la mise en oeuvre, par le processeur 1801, de tout ou partie d'un procédé décrit en relation avec les Fig. 2, Fig. 3 et Fig. 4 ou les variantes décrites de ces procédés.

Tout ou partie des procédés décrits en relation avec les Fig. 2, Fig. 3 et Fig. 4 ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif gestionnaire de connexions 18 comprend de la circuiterie électronique configurée pour mettre en oeuvre les procédés décrits en relation avec le dispositif gestionnaire de connexions 18. Bien évidemment, le dispositif gestionnaire de connexions 18 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

## Revendications

1. Procédé de basculement de la connexion d'une station mobile (164), depuis un premier point d'accès sans-fil (162) à un réseau de communication (1) de type réseau local comprenant un système d'extension de couverture de communication sans-fil auquel la station mobile (164) est connectée, vers un deuxième point d'accès sans-fil (171) audit réseau (1), le procédé étant exécuté dans un dispositif dit « gestionnaire de connexions » (18) dudit réseau de communication (1), le procédé comprenant :
- sélectionner (S2) le deuxième point d'accès sans fil (171) comme meilleur candidat pour une connexion sans fil de la station mobile (164) audit réseau (1), le deuxième point d'accès sans fil (171) étant sélectionné parmi une pluralité de points d'accès sans fil (162, 171) dudit réseau de communication (1), ladite pluralité de points d'accès sans fil (162, 171) comprenant au moins les premier et deuxième points d'accès sans fil (162, 171), une évaluation (S1) du meilleur candidat avant sélection (S2) étant réalisée selon au moins un critère prédéterminé,
- solliciter un basculement de la connexion sans-fil de la station mobile (164) depuis le premier point d'accès sans fil (162) vers le deuxième point d'accès sans fil (171), selon un message protocolaire en ce sens, et,
- si ladite station mobile (164) n'opère pas le basculement de connexion sollicité en réponse au message protocolaire émis :
∘ modifier (S3) une valeur d'un paramètre de transmission d'au moins le premier point d'accès sans fil (162), la valeur modifiée dudit paramètre étant de nature à dégrader les performances de transmission entre le premier point d'accès (162) sans fil et la station mobile (164) par rapport à une transmission basée sur la valeur dudit paramètre avant modification,
∘ transmettre vers la station mobile (164) un message comprenant une proposition de connexion au deuxième point d'accès sans fil (171).

2. Procédé de basculement de la connexion d'une station mobile selon la revendication précédente, dans lequel ledit au moins un critère prédéterminé de l'évaluation (S1) du meilleur candidat étant dans la liste :
- un nombre de stations connectées au premier point d'accès sans fil,
- un nombre de stations connectées au deuxième point d'accès sans fil,
- un nombre moyen de stations connectées par point d'accès sans fil audit réseau de communication,
- un indicateur de force de signal en réception représentatif d'un signal reçu par la station mobile lors d'une transmission à partir d'un point d'accès sans fil,
- un débit de transmission vers ou depuis la station mobile.

3. Procédé de basculement de la connexion d'une station mobile (164) selon l'une quelconque des revendications 1 et 2, le procédé comprenant, préalablement à l'étape de sélection (S2) du deuxième point d'accès sans fil (171) :
- obtenir depuis la station mobile (164), des informations représentatives de la perception des premier (162) et deuxième (171) points d'accès sans fil par la station mobile (164).

4. Procédé de basculement de la connexion d'une station mobile (164) selon l'une quelconque des revendications précédentes, comprenant en outre, postérieurement à la transmission vers la station mobile (164) du message comprenant une proposition de connexion au deuxième point d'accès sans fil (171) :
- détecter (S41) une connexion de la station mobile (164) au deuxième point d'accès sans fil (171),
- enregistrer (S42) la valeur modifiée du paramètre de transmission d'au moins le premier point d'accès sans fil (162) pour laquelle la connexion de la station mobile (164) au deuxième point d'accès sans fil (171) a été détectée, en combinaison avec un identifiant de la station mobile (164) dans le réseau de communication (1).

5. Procédé de basculement de la connexion d'une station mobile (164) selon l'une quelconque des revendications précédentes, dans lequel le paramètre de transmission est un paramètre de modulation ou de puissance.

6. Dispositif (18) dit « gestionnaire de connexions » d'un réseau de communication (1) de type réseau local comprenant un système d'extension de couverture de communication sans-fil et un premier point d'accès sans fil (162) auquel une station mobile (164) est connectée, ledit dispositif (18) comprenant des circuits électroniques et/ou radioélectriques configurés pour :
- sélectionner (S2) un deuxième point d'accès sans fil (171) dudit réseau de communication (1) comme meilleur candidat pour une connexion sans fil de la station mobile (164) audit réseau (1), le deuxième point d'accès sans fil (171) étant sélectionné parmi une pluralité de points d'accès sans fil (162, 171) dudit réseau de communication (1), ladite pluralité de points d'accès sans fil (162, 171) comprenant au moins les premier et deuxième points d'accès sans fil (162, 171), une évaluation (S1) du meilleur candidat avant sélection (S2) étant réalisée selon au moins un critère prédéterminé,
- solliciter un basculement de la connexion sans-fil de la station mobile (164) depuis le premier point d'accès sans fil (162) vers le deuxième point d'accès sans fil (171) sélectionné, selon un message protocolaire en ce sens, et,
- si ladite station mobile (164) n'opère pas le basculement de connexion sollicité en réponse au message protocolaire émis :
- modifier (S3) une valeur d'un paramètre de transmission d'au moins le premier point d'accès sans fil (162) audit réseau (1), la valeur modifiée dudit paramètre étant de nature à dégrader des performances de transmission entre le premier point d'accès sans fil (162) et la station mobile (164) par rapport à une transmission basée sur la valeur dudit paramètre avant modification,
- transmettre vers la station mobile (164) un message comprenant une proposition de connexion au deuxième point d'accès sans fil (171).

7. Dispositif (18) dit « gestionnaire de connexions » selon la revendication précédente dans lequel ledit paramètre de transmission est un paramètre de modulation ou de puissance.

8. Dispositif point d'accès sans fil (162, 171) à un réseau de communication (1), le dispositif point d'accès sans fil (162, 171) comprenant un dispositif gestionnaire de connexions (18) selon la revendication précédente.

9. Réseau de communication (1) de type réseau local comprenant un système d'extension de couverture de communication sans-fil, un premier point d'accès sans fil (162) auquel une station mobile (164) est connectée et un deuxième point d'accès sans fil (171), ledit réseau de communication (1) comprenant en outre un dispositif gestionnaire de connexions (18) selon la revendication 6 ou un dispositif point d'accès sans fil (162, 171) selon la revendication 8.

10. Produit programme d'ordinateur **caractérisé en ce qu'**il comprend des instructions de codes de programme pour exécuter les étapes du procédé selon l'une quelconque des revendications 1 à 5, lorsque ledit programme est exécuté par un processeur d'un dispositif gestionnaire de connexions (18) d'un réseau de communication (1).

11. Support de stockage d'informations comprenant un produit programme d'ordinateur selon la revendication 10.

## Patentansprüche

1. Verfahren zum Umschalten der Verbindung einer Mobilstation (164) von einem ersten drahtlosen Zugangspunkt (162) zu einem Kommunikationsnetz (1) der Art lokales Netz, das ein System zur Abdeckungserweiterung drahtloser Kommunikation enthält, mit dem die Mobilstation (164) verbunden ist, zu einem zweiten drahtlosen Zugangspunkt (171) zu dem Netz (1), wobei das Verfahren in einer "Verbindungsmanager" (18) genannten Vorrichtung des Kommunikationsnetzes (1) ausgeführt wird, wobei das Verfahren enthält:
- Auswahl (S2) des zweiten drahtlosen Zugangspunkts (171) als bester Kandidat für eine drahtlose Verbindung der Mobilstation (164) mit dem Netz (1), wobei der zweite drahtlose Zugangspunkt (171) aus einer Vielzahl drahtloser Verbindungspunkte (162, 171) des Kommunikationsnetzes (1) ausgewählt wird, wobei die Vielzahl drahtloser Verbindungspunkte (162, 171) mindestens den ersten und den zweiten drahtlosen Verbindungspunkt (162, 171) enthält, wobei eine Ermittlung (S1) des besten Kandidaten vor der Auswahl (S2) gemäß mindestens einem vorbestimmten Kriterium durchgeführt wird,
- Anforderung eines Umschaltens der drahtlosen Verbindung der Mobilstation (164) vom ersten drahtlosen Zugangspunkt (162) zum zweiten drahtlosen Zugangspunkt (171), gemäß einer Protokollnachricht in diesem Sinne, und,
- wenn die Mobilstation (164) die angeforderte Verbindungsumschaltung als Antwort auf die gesendete Protokollnachricht nicht vornimmt:
∘ Änderung (S3) eines Werts eines Übertragungsparameters mindestens des ersten drahtlosen Zugangspunkts (162), wobei der geänderte Wert des Parameters geeignet ist, die Übertragungsleistungen zwischen dem ersten drahtlosen Zugangspunkt (162) und der Mobilstation (164) im Vergleich zu einer auf dem Wert des Parameters vor der Änderung basierenden Übertragung zu verschlechtern,
∘ Übertragung einer Nachricht an die Mobilstation (164), die einen Verbindungsvorschlag zum zweiten drahtlosen Zugangspunkt (171) enthält.

2. Verfahren zum Umschalten der Verbindung einer Mobilstation nach dem vorhergehenden Anspruch, wobei das mindestens eine vorbestimmte Kriterium der Ermittlung (SI) des besten Kandidaten in der Liste ist:
- eine Anzahl von Stationen, die mit dem ersten drahtlosen Zugangspunkt verbunden sind,
- eine Anzahl von Stationen, die mit dem zweiten drahtlosen Zugangspunkt verbunden sind,
- eine mittlere Anzahl von Stationen, die pro drahtlosem Zugangspunkt mit dem Kommunikationsnetz verbunden sind,
- ein Empfangssignalstärkeanzeiger, der für ein von der Mobilstation bei einer Übertragung ausgehend von einem drahtlosen Zugangspunkt empfangenes Signal repräsentativ ist,
- ein Übertragungsdurchsatz zu oder von der Mobilstation.

3. Verfahren zum Umschalten der Verbindung einer Mobilstation (164) nach einem der Ansprüche 1 und 2, wobei das Verfahren vor dem Auswahlschritt (S2) des zweiten drahtlosen Zugangspunkts (171) enthält:
- Erhalt von Informationen von der Mobilstation (164), die für die Wahrnehmung der ersten (162) und zweiten (171) drahtlosen Verbindungspunkte durch die Mobilstation (164) repräsentativ sind.

4. Verfahren zum Umschalten der Verbindung einer Mobilstation (164) nach einem der vorhergehenden Ansprüche, das außerdem nach der Übertragung der einen Verbindungsvorschlag mit dem zweiten drahtlosen Zugangspunkt (171) enthaltenden Nachricht an die Mobilstation (164) enthält:
- Erkennen (S41) einer Verbindung der Mobilstation (164) mit dem zweiten drahtlosen Zugangspunkt (171),
- Speichern (S42) des geänderten Werts des Übertragungsparameters mindestens des ersten drahtlosen Zugangspunkts (162), für den die Verbindung der Mobilstation (164) mit dem zweiten drahtlosen Zugangspunkt (171) erkannt wurde, in Kombination mit einer Kennung der Mobilstation (164) im Kommunikationsnetz (1).

5. Verfahren zum Umschalten der Verbindung einer Mobilstation (164) nach einem der vorhergehenden Ansprüche, wobei der Übertragungsparameter ein Modulations- oder Leistungsparameter ist.

6. "Verbindungsmanager" genannte Vorrichtung (18) eines Kommunikationsnetzes (1) der Art lokales Netz, das ein System zur Abdeckungserweiterung drahtloser Kommunikation und einen ersten drahtlosen Zugangspunkt (162) enthält, mit dem eine Mobilstation (164) verbunden ist, wobei die Vorrichtung (18) elektronische und/oder Funkschaltungen enthält, die konfiguriert sind:
- einen zweiten drahtlosen Zugangspunkt (171) des Kommunikationsnetzes (1) als besten Kandidaten für eine drahtlose Verbindung der Mobilstation (164) mit dem Netz (1) auszuwählen (S2), wobei der zweite drahtlose Zugangspunkt (171) aus einer Vielzahl drahtloser Verbindungspunkte (162, 171) des Kommunikationsnetzes (1) ausgewählt wird, wobei die Vielzahl drahtloser Verbindungspunkte (162, 171) mindestens die ersten und zweiten drahtlosen Verbindungspunkte (162, 171) enthält, wobei eine Ermittlung (S1) des besten Kandidaten vor der Auswahl (S2) gemäß mindestens einem vorbestimmten Kriterium durchgeführt wird,
- ein Umschalten der drahtlosen Verbindung der Mobilstation (164) vom ersten drahtlosen Zugangspunkt (162) zum ausgewählten zweiten drahtlosen Zugangspunkt (171) gemäß einer Protokollnachricht in diesem Sinne anzufordern, und,
- wenn die Mobilstation (164) das angeforderte Verbindungsumschalten als Antwort auf die gesendete Protokollnachricht nicht vornimmt:
- einen Wert eines Übertragungsparameters von mindestens dem ersten drahtlosen Zugangspunkt (162) zum Netz (1) zu ändern (S3), wobei der geänderte Wert des Parameters geeignet ist, Übertragungsleistungen zwischen dem ersten drahtlosen Zugangspunkt (162) und der Mobilstation (164) bezüglich einer auf dem Wert des Parameters vor der Änderung basierenden Übertragung zu verschlechtern,
- eine Nachricht an die Mobilstation (164) zu übertragen, die einen Verbindungsvorschlag mit dem zweiten drahtlosen Zugangspunkt (171) enthält.

7. "Verbindungsmanager" genannte Vorrichtung (18) nach dem vorhergehenden Anspruch, wobei der Übertragungsparameter ein Modulations- oder Leistungsparameter ist.

8. Drahtlose Zugangspunktvorrichtung (162, 171) zu einem Kommunikationsnetz (1), wobei die drahtlose Zugangspunktvorrichtung (162, 171) eine Verbindungsmanagervorrichtung (18) nach dem vorhergehenden Anspruch enthält.

9. Kommunikationsnetz (1) vom Typ lokales Netz, das ein System zur Abdeckungserweiterung drahtloser Kommunikation, einen ersten drahtlosen Zugangspunkt (162), mit dem eine Mobilstation (164) verbunden ist, und einen zweiten drahtlosen Zugangspunkt (171) enthält, wobei das Kommunikationsnetz (1) außerdem eine Verbindungsmanagervorrichtung (18) nach Anspruch 6 oder eine drahtlose Zugangspunktvorrichtung (162, 171) nach Anspruch 8 enthält.

10. Computerprogrammprodukt, **dadurch gekennzeichnet, dass** es Programmcodeanweisungen enthält, um die Schritte des Verfahrens nach einem der Ansprüche 1 bis 5 auszuführen, wenn das Programm von einem Prozessor einer Verbindungsmanagervorrichtung (18) eines Kommunikationsnetzes (1) ausgeführt wird.

11. Informationsspeicherträger, der ein Computerprogrammprodukt nach Anspruch 10 enthält.

## Claims

1. Method for switching the connection of a mobile station (164), from a first point (162) of wireless access to a communication network (1) of the local area network type comprising a wireless communication coverage extension system to which the mobile station (164) is connected, to a second point (171) of wireless access to said network (1), the method being implemented in a so-called "connection-management" device (18) of said communication network (1), the method comprising:
- selecting (S2) the second wireless access point (171) as the best candidate for a wireless connection of the mobile station (164) to said network (1), the second wireless access point (171) being selected from a plurality of wireless access points (162, 171) of said communication network (1), said plurality of wireless access points (162, 171) comprising at least the first and second wireless access points (162, 171), an evaluation (S1) of the best candidate before selection (S2) being made in accordance with a predetermined criterion,
- seeking the switching of the wireless connection of the mobile station (164) from the first wireless access point (162) to the second wireless access point (171), in accordance with a protocol message in this regard, and,
- if said mobile station (164) does not implement the switching of the connection sought in response to the protocol message sent:
∘ modifying (S3) a value of a transmission parameter of at least the first wireless access point (162), the modified value of said parameter being of such a nature as to degrade the transmission performances between the first wireless access point (162) and the mobile station (164) compared with a transmission based on the value of said parameter before modification,
∘ transmitting to the mobile station (164) a message comprising a proposal to connect to the second wireless access point (171).

2. Method for switching the connection of a mobile station according to the preceding claim, wherein the at least one predetermined criterion for evaluating (S1) the best candidate being in the list:
- a number of stations connected to the first wireless access point,
- a number of stations connected to the second wireless access point,
- a mean number of stations connected per wireless access point to said communication network,
- a reception signal strength indicator representing a signal received by the mobile station during a transmission from a wireless access point,
- a transmission rate to or from the mobile station.

3. Method for switching the connection of a mobile station (164) according to either one of claims 1 and 2, the method comprising, prior to the step of selecting (S2) the second wireless access point (171):
- obtaining from the mobile station (164) information representing the perception of the first (162) and second (171) wireless access points by the mobile station (164).

4. Method for switching the connection of a mobile station (164) according to any one of the preceding claims, further comprising, subsequently to the transmission to the mobile station (164) of the message comprising a proposal to connect to the wireless access point (171):
- detecting (S41) a connection of the mobile station (164) to the second wireless access point (171),
- recording (S42) the modified value of the transmission parameter of at least the first wireless access point (162) for which the connection of the mobile station (164) to the second wireless access point (171) was detected, in combination with an identifier of the mobile station (164) in the communication network (1).

5. Method for switching the connection of a mobile station (164) according to any one of the preceding claims, wherein the transmission parameter is a modulation or power parameter.

6. So-called "connection-management" device (18) of a communication network (1) of the local area network type comprising a wireless communication coverage extension system and a first wireless access point (162) to which a mobile station (164) is connected, said device (18) comprising electronic and/or radio circuits configured for:
- selecting (S2) a second wireless access point (171) of said communication network (1) as the best candidate for a wireless connection of the mobile station (164) to said network (1), the second wireless access point (171) being selected from a plurality of wireless access points (162, 171) of said communication network (1), said plurality of wireless access points (162, 171) comprising at least the first and second wireless access points (162, 171), an evaluation (S1) of the best candidate before selection (S2) being made in accordance with a predetermined criterion,
- seeking a switching of the wireless connection of the mobile station (164) from the first wireless access point (162) to the second wireless access point (171) selected, in accordance with a protocol message in this regard, and,
- if said mobile station (164) does not implement the switching of the connection sought in response to the protocol message sent:
- modifying (S3) a value of a transmission parameter of at least the first point (162) of wireless access to said network (1), the modified value of said parameter being of such a nature as to degrade the transmission performances between the first wireless access point (162) and the mobile station (164) compared with a transmission based on the value of said parameter before modification,
- transmitting to the mobile station (164) a message comprising a proposal to connect to the second wireless access point (171).

7. So-called "connection-management" device (18) according to the preceding claim, wherein said transmission parameter is a modulation or power parameter.

8. Device (162, 171) constituting a point of wireless access to a communication network (1), the wireless access point device (162, 171) comprising a connection-management device (18) according to the preceding claim.

9. Communication network (1) of the local area network type comprising a wireless communication coverage extension system, a first wireless access point (162) to which a mobile station (164) is connected and a second wireless access point (171), said communication network (1) furthermore comprising a connection-management device (18) according to claim 6 or a wireless access point device (162, 171) according to claim 8.

10. Computer program product, **characterised in that** it comprises program code instructions for performing the steps of the method according to any one of claims 1 to 5, when said program is executed by a processor of a connection-management device (18) of a communication network (1).

11. Information storage medium comprising a computer program product according to claim 10.
